(19) **Europäisches Patentamt European Patent Office Office européen des brevets**

(11) **EP 2 979 414 B1**

(12) **EUROPEAN PATENT SPECIFICATION**

(45) Date of publication and mention of the grant of the patent:
**10.04.2019 Bulletin 2019/15**

(51) Int Cl.:
*H04L 29/02* (2006.01)    *H04L 29/06* (2006.01)

(21) Application number: **13880537.9**

(22) Date of filing: **20.12.2013**

(86) International application number:
**PCT/US2013/077142**

(87) International publication number:
**WO 2014/158264 (02.10.2014 Gazette 2014/40)**

(54) **QUALITY-AWARE RATE ADAPTATION TECHNIQUES FOR DASH STREAMING**

QUALITÄTSBEWUSSTE RATENANPASSUNGSVERFAHREN FÜR DASH-STREAMING

TECHNIQUES D'ADAPTATION DE DÉBIT SENSIBLES À LA QUALITÉ POUR LA DIFFUSION EN FLUX DE TYPE DASH

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 US 201361806821 P**

(43) Date of publication of application:
**03.02.2016 Bulletin 2016/05**

(73) Proprietor: **Intel IP Corporation**
**Santa Clara, CA 95054 (US)**

(72) Inventors:
• **LIAO, Yiting**
**Santa Clara, CA 95054 (US)**
• **OYMAN, Ozgur**
**San Jose, CA 95134 (US)**
• **FOERSTER, Jeffrey, R.**
**Portland, OR 97229 (US)**
• **REHAN, Mohamed, M.**
**Cairo 11451 (EG)**
• **HASSAN, Yomna**
**Cairo 11624 (EG)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2012/134530    WO-A1-2012/167106**
**JP-A- 2010 045 847    US-A1- 2009 290 555**
**US-A1- 2012 209 952**

• **"3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH) (Release 11)", 3GPP STANDARD; 3GPP TS 26.247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V11.1.0, 5 December 2012 (2012-12-05), pages 1-113, XP050691164, [retrieved on 2012-12-05]**
• **RAF HUYSEGEMS ET AL: "Session reconstruction for HTTP adaptive streaming: Laying the foundation for network-based QoE monitoring", QUALITY OF SERVICE (IWQOS), 2012 IEEE 20TH INTERNATIONAL WORKSHOP ON, IEEE, 4 June 2012 (2012-06-04), pages 1-9, XP032207367, DOI: 10.1109/IWQOS.2012.6245987 ISBN: 978-1-4673-1296-7**
• **KONSTANTIN MILLER ET AL.: 'Adaptation Algorithm for Adaptive Streaming over H TTP' PACKET VIDEO WORKSHOP (PV) 10 May 2012, MUNICH, pages 173 - 178, XP032451760 Retrieved from the Internet: <URL:http://www.tkn.tu-berlin.de /fileadmin/fg112/Papers/Adaptation_Algorith m_for _Adaptive_Streaming_over_HTTP.pdf>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Priority Claim**

**Technical Field**

Embodiments described herein relate generally to wireless networks and communications systems.

**Background**

Dynamic Adaptive Streaming over HTTP (DASH) is a technology standardized in 3GPP TS26.247 of the 3rd Generation Partnership Project (3GPP) and MPEG ISO/IEC DIS 23009-1 of the Motion Picture Experts Group (MPEG). In DASH, the media presentation description (MPD) metadata file provides information on the structure and different versions of the media content stored in the server (including different bitrates, frame rates, resolutions, codec types, etc.). Based on this MPD metadata information, clients request segments of the media content using HTTP requests. The client fully controls the streaming session and may request different versions of the media content during playback.
An efficient rate adaptation algorithm is critical to optimize the quality of experience (QoE) for a DASH client. Requesting media at a bitrate higher than the available network bandwidth can lead to re-buffering events that disrupt user experience. Requesting media at lower bitrates, on the other hand, may lead to sub-optimum streaming quality. Described herein are techniques relating to advanced rate adaptation algorithms for DASH clients.
In "3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH)", Technical Specification 3GPP TS 26.247, V11.1.0, 2012, progressive download and dynamic adaptive streaming over HTTP is disclosed and DASH clients with quality of experience (QoE) reporting functionality are detailed. According to an example DASH client behavior, a client passes a media presentation description (MPD) and selects one specific representation based on a bandwidth attribute, while taking into account client decoding and rendering capabilities. The requested representations are buffered and rendered provided the observed throughput remains at or above the sum of the bandwidth attribute of the selected representation. Once the presentation has started, the client continues consuming the media content by continuously requesting further media segments. The client may switch representations taking into account updated MPD information and/or updated information from its environment, such as a change of observed throughput.
R. Huysegems et al.:"Session reconstruction for HTTP adaptive streaming", IEEE 20th International Workshop on Quality of Service, 2012, discloses a framework for network-based QoE monitoring for HTTP additive streaming. Determined QoE parameters are aggregated in order to reflect current network capabilities. The QoE parameters are used by an operator of the network to adapt the network to the currently requested media, including real time adjustments in the behavior of network nodes to improve handling of HTTP adaptive streaming sessions.
US 2012/0209952 A1 discloses an approach for distribution and reception of content. A quality function for content is sent to intermediate cash proxy servers or receivers. The quality function provides a functional relationship between at least two quality metrics for the content object so that a perceivable quality of the content object at a receiver may be estimated based on the quality function. The quality function is represented by a polynomic series and/or a set of mean and standard deviation values.
The present invention is defined by a method for receiving DASH data in a client device over a network and a user equipment device for operating in an LTE network according to the independent claims. Preferred embodiments are defined in the dependent claims.

**Brief Description of the Drawings**

Fig. 1 illustrates an example of a DASH-based streaming framework.

Fig. 2 illustrates a client device communicating with a media server via an LTE network.

Fig. 3 illustrates a client device communicating with a media server via WLAN access to the internet.

**Detailed Description**

In DASH, media content is transferred from a media server that stores the media content to a client using segment-based HTTP streaming. The client plays back the media content as it is received. The media server may store the media content encoded in different versions that differ as to bitrates, resolutions, or other characteristics. Each different version of the media content is referred to as a representation. Each representation stored by the media server is divided into segments that can be accessed individually by the client via HTTP GET or partial GET requests. Each representation may thus consist of several segments of a particular length, The client is able to switch between different representations at segment boundaries during media playback to adjust the bitrate, resolution, or other characteristics. For example, the client may wish to decrease the bitrate and resolution when network conditions deteriorate. To direct the client in downloading the content, a manifest file called the media presentation description is downloaded from the server at the beginning of the steaming session. The MPD contains information relating to the bitrate, resolution, and/or other characteristics of each representation as well as the URLs (uniform resource locators) of the segments making up each representation. Segment formats may also be specified, which can contain information on initialization and media segments for a media engine to ensure mapping of segments into a media presentation timeline for switching and synchronous presentation with other representations. Based on the MPD metadata information, which describes the relationship of the segments and how the segments form a media presentation, a client requests the segments using an HTTP GET message or a series of partial GET messages. The client is able to control the streaming session by managing on-time requests to result in a smooth playback of a sequence of segments, adjusting bitrates or other attributes, and/or reacting to changes in a device state or a user preference.

Changing content, such as switching sports/static scenes in news channels makes it very difficult for video encoders to deliver consistent quality and at the same time produce a bitstream that has a certain specified bitrate. As a result, quality may fluctuate significantly. Quality-related information may be added to different encoded versions of various media components, and across segments and sub-segments of the various representations and sub-representations. The added quality information allows more advanced rate-adaptation algorithms for DASH clients. In addition to adapting media bitrate to network bandwidth, the DASH client may jointly consider requested video quality to optimize overall QoE of DASH streaming. The present disclosure proposes quality-aware rate adaptation principles and algorithms for DASH clients. To enable these advanced rate adaptation methods, quality information is added to the manifest file for adaptive HTTP streaming or is generated by the client.

Examples of a quality measures could include Video MS-SSIM (Multi-Scale Structural Similarity), video MOS (mean opinion score), video quality metrics (VQM), structural similarity metrics (SSIM), peak signal-to-noise ratio (PSNR), and perceptual evaluation of video quality metrics (PEVQ). This quality related information is then used to help determine the requested representation given the bandwidth constraints and quality requirements. In one embodiment, the quality related information is included in the MPD file and generated by the media server. The media server may acquire the information to compute the quality measures by analyzing the video content at the pixel level and/or extracting information from the codec during compression. The resulting quality measures are then signaled to the client via the MPD files, mapped by the client to subjective quality measures, and fed into the client's rate adaptation logic. In another embodiment, the client dynamically generates subjective quality information in a non-reference fashion based upon the received media files.

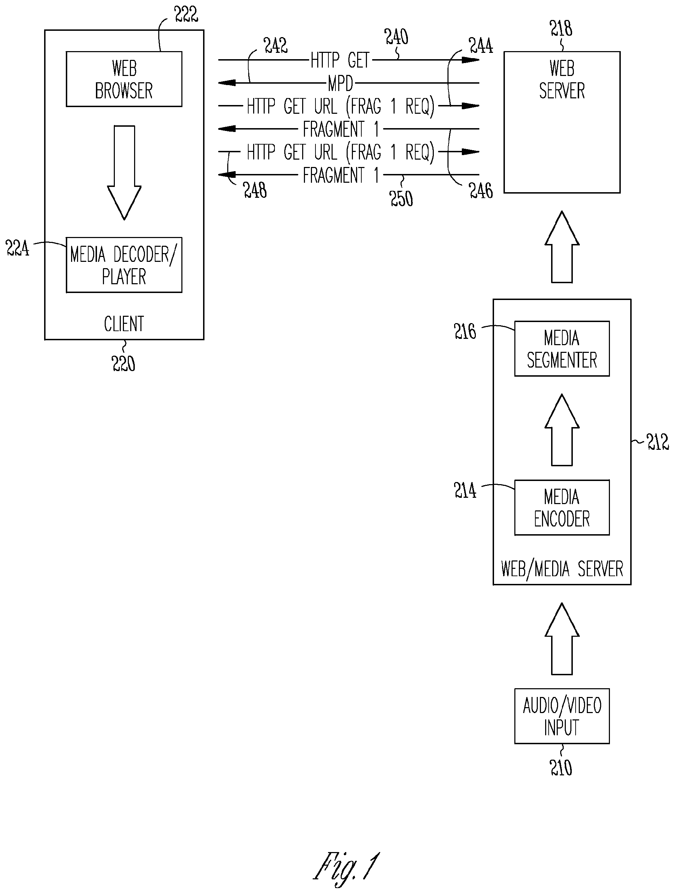

FIG. 1 illustrates an example of a DASH-based streaming framework. A media encoder 214 in the web/media server 212 is used encode an input media from an audio/video input 210 into a format for storage or streaming. A media segmenter 216 splits the input media into a serial of fragments or chunks which can then be provided to a web server 218 (e.g., an HTTP server). The client 220 requests new data in chunks using HTTP GET messages 234 sent to the web server 218. For example, a web browser 222 of the client 220 requests multimedia content using an HTTP GET message 240. The web server 218 then provides the client with an MPD 242 for the multimedia content. The MPD is used to convey the index of each segment and the segment's corresponding locations as shown in the associated metadata information. The web browser is then able to pull media from the server segment by segment in accordance with the MPD 242. As shown in the figure, the web browser can request a first fragment using a HTTP GET URL (frag 1 req) 244 where a uniform resource locator (URL) or universal resource indicator is used to tell the web server which segment the client requesting. The web server can then provide the first fragment (i.e., fragment 1 246). For subsequent fragments, the web browser requests a fragment i using a HTTP GET URL (frag i req) 248, where i is an integer index of the fragment. As a result, the web server provides a fragment i 250. The fragments are then presented to the client via a media decoder/player 224. The client may employ a quality-aware rate adaptation algorithm to determine which particular segments are requested from the web server.

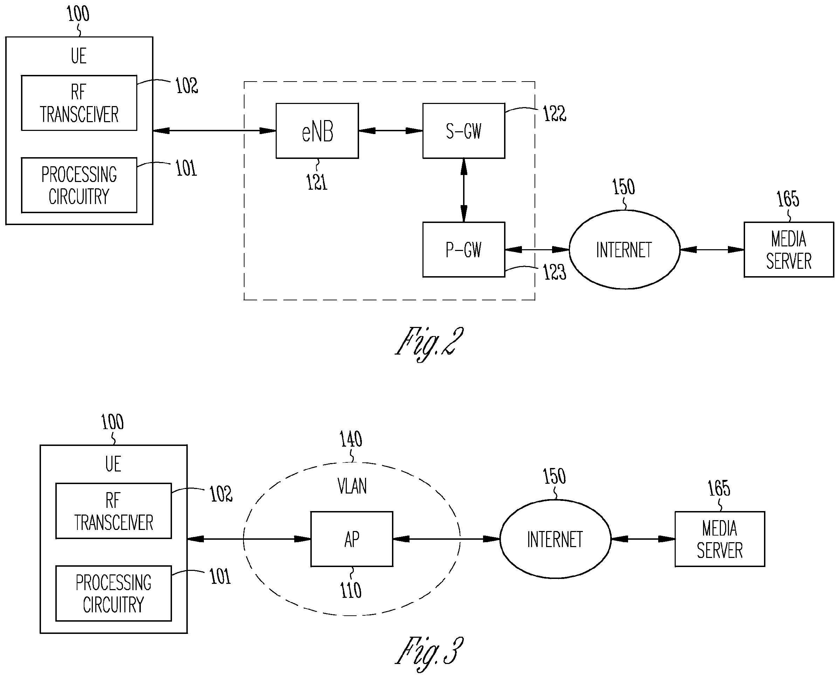

Fig. 2 illustrates an embodiment where the client is a UE (user equipment), referring to how terminals are designated in LTE (Long Term Evolution) cellular systems as set forth in the LTE specifications of the 3rd Generation Partnership Project (3GPP). In LTE, a terminal acquires cellular network access by connecting to a public land mobile network (PLMN) belonging to an operator or service provider. The connectivity to the PLMN is provided by a base station (referred in LTE systems as an evolved Node B or eNB). The UE 100 includes processing circuitry 101 and an RF (radiofrequency) transceiver for cellular network access. The processing circuitry includes the functionalities for network access via the RF transceiver as well as DASH client functionalities for requesting, receiving, buffering, and playing back (e.g., audio and/or video) media files received from a media server. The processing circuitry also includes functionality for performing any of the rate adaptation algorithms and methods as described herein.

In Fig. 2, the UE 100 communicates with eNB 121 of a PLMN 120 via an RF communications link, sometimes referred to as the LTE radio or air interface. The eNB 121 provides connectivity to the PLMN's evolved packet core (EPC), the main components of which (in the user plane) are S-GW 122 (serving gateway) and P-GW 123 (packet data network (PDN) gateway). The P-GW is the EPC's point of contact with the outside world and exchanges data with one or more packet data networks such as the internet 150, while the S-GW acts as a router between the eNB and P-GW. The UE is thus able to request and receive data from media server 165.

As the term is used herein, a UE may also be any type of terminal that is capable of acquiring network access, either cellular access as above in an LTE network, or otherwise such as via a WLAN (wireless local area network) such as a WiFi network. Many UEs are so-called dual-mode UEs that allow both cellular and WLAN access to be acquired. Fig. 3 shows another scenario where UE 100 acquires network access by connecting to an AP (access point) 110 of WLAN 140. The WLAN is able to provide connectivity to the internet 150 via direct internet access and enable the UE to request and receive data from media server 165.

A quality-aware rate adaptation method implemented by a client may incorporate any or all of the following features. It may estimate the dynamics of available network bandwidth to aid in which representation of a media file are to be selected. A sliding window may be used to measure the download rates at the client over a defined time interval. The sliding window may contain the download rate of previous duration for use in estimating the available download rate for the next segment. The client may control the buffer level and prevent buffering events that cause playback interruptions. The client may monitor the buffer level and switch the representation bitrates to avoid buffer underflow or overflow.

The client may try to maximize the overall quality of video stream under the bandwidth constraints and minimize the quality variations over time. Due to the changing characteristics of video content, the same representation index across different segments may correspond to different quality and bitrate values. The client may try to minimize the playback startup time. For example, after the requesting the DASH content, the rate adaptation may select content that result in starting the playback as fast as possible. The rate adaptation method may also act in a manner that provides good overall QoE and fairness across multiple DASH clients. DASH clients may simultaneously stream videos in the network and compete for the available bandwidth. The rate adaptation algorithm may also take into account the particular client device capabilities and adapt the bitrate based on the quality in different devices.

*Example rate adaptation algorithm*

An example quality-aware rate adaptation algorithm is described below using the following definitions:

$R(r, s)$: bitrate of representation r for segment s, r=1, 2, ..., m; s=1, 2, ..., n, where $R(1, s) < R(2, s) < ... < R(m, s)$
$Q(r, s)$: quality of representation r for segment s
$BW(s)$: Available throughput in the past for segment s
$BW_{est}(s)$: Estimated throughput for current segment s
$buf(t)$: Buffer level at time t, measured in seconds of playback
$B_{low}$ and $B_{high}$: Lower and upper buffer level thresholds, respectively, measured in, for example, seconds of playback
$Q_{max}(d)$ and $Q_{min}(d)$: Maximum and minimum quality levels, respectively, required for a particular device *d*
$r(s)$: The representation to be selected for download for segment s, where $r(s) \in [1, m]$

The quality-aware algorithm tries to optimize the QoE of a DASH client by maintaining a better trade-off between buffer levels and quality fluctuations. The algorithm determines, for each segment making up the media presentation, which particular representation is to be downloaded. That is, it determines:
$r(s)$, for s = 1, 2, 3, ..., n
where n is the number of segments in the media presentation.

At the startup phase, the algorithm selects the lowest bitrate representation for the first $N_s$ segments in order to minimize the playback delay:

$$r(s) = \operatorname{argmin}_r ((Q(r,s) > Q_{min}); \ r = 1, ...m; \ s = 1, ... N_s;$$

where $N_s$ is a specified integer, $r(s)$ is the representation *r* to be selected for media segment *s*, $r \in [1, m]$, *m* is the number of representations available for media segment *s*, $Q(r,s)$ is the quality of representation *r* for segment *s*, and $Q_{min}$ is a specified minimum quality requirement.

After a particular segment *s-1* is downloaded, available throughput for segment *s-1* is estimated as BW(s-1), and the estimated throughput for the next segment s is then determined as a weighted sum of the past K segments throughput:

$$BW_{est}(s) = \sum_{i=1}^{K} w(i)BW\,(s-i)$$

where K is a specified integer and the *w(i)* are specified weighting factors.

For each segment *s*, the algorithm determines the lowest bitrate representation that satisfies the minimum quality requirement for the current device as:

$$r_{qmin}(s) = \mathrm{argmin}_r \,((Q(r,s) > Q_{min}),$$

determines is the lowest bitrate representation that satisfies the maximum quality requirement for current device as:

$$r_{qmax}(s) = \mathrm{argmin}_r \,((Q(r,s) > Q_{max}),$$

and determines the highest bitrate representation under the current throughput constraints as:

$$r_{rmax}(s) = \mathrm{argmax}_r \,((R(r,s) < BW_{est}(s).$$

As the media file is downloaded, the client buffers the data. The amount of data stored in the client's buffer is then used to determine the selected representation for current segment *s* that is to be downloaded. At the beginning of streaming, the DASH client enters the buffering state and the lowest bitrate representation is requested, expressed as:

$$\text{if buf(t)} \approx 0, \text{ then: } r(s) = r(1,s), \ \ s = 1, \dots N$$

When the buffer level is low, the client performs more conservatively and tries to either request a representation with a bitrate lower than the available throughput or meet the minimum quality requirement. This may be expressed as:

$$\text{if buf(t)} < B_{low}, \text{ then: } r(s) = \min(r_{qmin}(s), r_{rmax}(s))$$

When the buffer level is under a safe level, the client tries not to request a representation higher than the available throughput unless the minimum quality requirement cannot be met. This may be expressed as:

$$\text{if } B_{low} \leq \text{buf(t)} < B_{high}, \text{ then: } r(s) = \min\,(\max(r_{qmin}(s), r_{rmax}(s)),$$

$$r_{qmax}(s))$$

When the buffer level is high, the client performs more aggressively and can request a representation with a bitrate higher than the available throughput in order to meet the maximum quality requirement. This may be expressed as:

$$\text{if buf(t)} \geq B_{high} \text{ and } R(r_{qmax}(s),s) < \alpha\,BW_{est}(s), \text{ then: } r(s) = r_{qmax}(s),$$

and

$$\text{if buf(t)} \geq B_{high} \text{ and } R(r_{qmax}(s),s) > \alpha\,BW_{est}(s) \text{ then: } r(s) = \max(r_{qmin}(s), r_{rmax}(s)),$$

where $\alpha$ is a specified number such that a larger $\alpha$ indicates the client performs more aggressively.

*Additional Notes and Examples*

In Example 1, a method for receiving DASH (dynamic streaming over HTTP (hypertext transfer protocol)) data in a client device over a network, comprises: receiving a media presentation description (MPD) from an HTTP server, wherein the MPD contains uniform resource identifiers (URIs) for a media presentation made up of a plurality of ordered media segments, and wherein, for each of the ordered media segments, the MPD contains URIs for the same media content at different bitrates, referred to as representations, and includes for each representation a bitrate and a quality measure related to the quality of experience (QoE) that results when that representation is played; and, downloading selected representations for playback at designated playback times from the HTTP server using the URIs in the MPD, wherein representations received before their designated playback times are stored in a buffer, and wherein representations are selected for downloading as a function of the amount of data currently stored in the buffer, the bitrates and quality measures of the representations, and an estimated currently available throughput capacity.

In Example 2, a method for receiving DASH (dynamic streaming over HTTP (hypertext transfer protocol)) data in a client device over a network, comprises: receiving a media presentation description (MPD) from an HTTP server, wherein the MPD contains uniform resource identifiers (URIs) for a media presentation made up of a plurality of ordered media segments, and wherein, for each of the ordered media segments, the MPD contains URIs for the same media content at different bitrates, referred to as representations, and includes for each representation a bitrate; and, downloading selected representations for playback at designated playback times from the HTTP server using the URIs in the MPD, wherein representations received before their designated playback times are stored in a buffer; generating quality measures related to the quality of experience (QoE) that results when representations are played; and selecting representations for downloading as a function of the amount of data currently stored in the buffer, the bitrates and quality measures of the representations, and an estimated currently available throughput capacity.

In Example 3, the subject matters of either of Example 1 or Example 2 may optionally include computing an estimated throughput capacity $BW_{est}(s)$ for a particular media segment $s$ as a weighted sum of the throughputs of previously downloaded media segments such that:

$$BW_{est}(s) = \sum_{i=1}^{K} w(i) BW(s-i)$$

where $BW(s)$ is the actual throughput corresponding to media segment $s$ and $K$ is a specified integer.

In Example 4, the subject matters of either of Example 1 or Example 2 may optionally include, for a media segment $s$, selecting a representation $r(s)$ for downloading with the lowest bitrate when $buf(t) = 0$ where $buf(t)$ is a measure of the amount of data stored in the buffer at time t and corresponds to a particular duration of playback.

In Example 5, the subject matters of either of Example 1 or Example 2 may optionally include, when $buf(t) < B_{low}$, where $buf(t)$ is a measure of the amount of data stored in the buffer at time $t$ corresponding to a particular duration of playback and where $B_{low}$ is a specified buffer level, selecting a representation $r(s)$ to be downloaded for media segment $s$ as:

$$r(s) = \min(r_{qmin}(s), r_{rmax}(s))$$

where $r_{qmin}(s)$ is the lowest bitrate representation that satisfies a specified minimum quality requirement $Q_{min}$ expressed as:

$$r_{qmin}(s) = \operatorname{argmin}_r ((Q(r,s) > Q_{min}),$$

where $r_{rmax}(s)$ is the highest bitrate representation under current throughput constraints expressed as:

$$r_{rmax}(s) = \operatorname{argmax}_r ((R(r,s) < BW_{est}(s),$$

where $Q(r,s)$ is the quality measure of representation $r$ for media segment $s$, and where $R(r,s)$ is the bitrate of representation $r$ for media segment s.

In Example 6, the subject matters of either of Example 1 or Example 2 may optionally include, when $B_{low} \leq buf(t) < B_{high}$, where $buf(t)$ is a measure of the amount of data stored in the buffer at time $t$ corresponding to a particular duration of playback and where $B_{low}$ and $B_{high}$ are specified buffer levels, selecting a representation $r(s)$ to be downloaded for media segment $s$ as:

$$r(s) = \min\left(\max(r_{qmin}(s), r_{rmax}(s)), r_{qmax}(s)\right)$$

where $r_{qmin}(s)$ is the lowest bitrate representation that satisfies a specified minimum quality requirement $Q_{min}$ expressed as:

$$r_{qmin}(s) = \operatorname{argmin}_r\left((Q(r,s) > Q_{min}\right),$$

where $r_{rmax}(s)$ is the highest bitrate representation under current throughput constraints expressed as:

$$r_{rmax}(s) = \operatorname{argmax}_r\left((R(r,s) < BW_{est}(s)\right),$$

where $r_{qmax}(s)$ is the lowest bitrate representation that satisfies a specified maximum quality requirement $Q_{max}$ expressed as:

$$r_{qmax}(s) = \operatorname{argmin}_r\left((Q(r,s) > Q_{max}\right),$$

where $Q(r,s)$ is the quality measure of representation $r$ for media segment $s$, and where $R(r,s)$ is the bitrate of representation $r$ for media segment $s$.

In Example 7, the subject matters of either of Example 1 or Example 2 may optionally include, when $B_{high} \leq buf(t)$, where $buf(t)$ is a measure of the amount of data stored in the buffer at time $t$ corresponding to a particular duration of playback and where $B_{high}$ is a specified buffer level, selecting a representation $r(s)$ to be downloaded for media segment $s$ as:

$$r(s) = r_{qmax}(s) \ \text{ if } R(r_{qmax}(s),s) < \alpha\, BW_{est}(s)$$

and as

$$r(s) = \max(r_{qmin}(s), r_{rmax}(s)) \ \text{ if } \ R(r_{qmax}(s),s) > \alpha\, BW_{est}(s)$$

where $\alpha$ is a specified parameter greater than one, where $r_{qmin}(s)$ is the lowest bitrate representation that satisfies a specified minimum quality requirement $Q_{min}$ expressed as:

$$r_{qmin}(s) = \operatorname{argmin}_r\left((Q(r,s) > Q_{min}\right),$$

where $r_{rmax}(s)$ is the highest bitrate representation under current throughput constraints expressed as:

$$r_{rmax}(s) = \operatorname{argmax}_r\left((R(r,s) < BW_{est}(s)\right),$$

where $r_{qmax}(s)$ is the lowest bitrate representation that satisfies a specified maximum quality requirement $Q_{max}$ expressed as:

$$r_{qmax}(s) = \operatorname{argmin}_r\left((Q(r,s) > Q_{max}\right),$$

where $Q(r,s)$ is the quality measure of representation $r$ for media segment $s$, and where $R(r,s)$ is the bitrate of representation $r$ for media segment $s$.

In Example 8, the subject matters of either of Example 1 or Example 2 may optionally include wherein the quality measure is selected from a group that includes Video MS-SSIM (Multi-Scale Structural Similarity), video MOS (mean opinion score), video quality metrics (VQM), structural similarity metrics (SSIM), peak signal-to-noise ratio (PSNR), and perceptual evaluation of video quality metrics (PEVQ).

In Example 9, the subject matters of either of Example 1 or Example 2 may optionally include, at the beginning of playback, requesting the representation with the lowest bitrate that meets a minimum quality requirement for the first $N$ representations in order minimize playback delay, where $N$ is a specified integer, such that:

$$r(s) = \mathrm{argmin}_r\,((Q(r,s) > Q_{min});\ r = 1,\ ...m;\ s = 1,\ ...\,N;$$

where $r(s)$ is the representation $r$ to be selected for media segment $s$, $r \in [1, m]$, $m$ is the number of representations available for media segment $s$, $Q(r,s)$ is the quality of representation $r$ for segment $s$, and $Q_{min}$ is a specified minimum quality requirement.

In Example 10, the subject matters of either of Example 1 or Example 2 may optionally include receiving the DASH data over a wireless network.

In Example 11, a user equipment (UE) device for operating in an LTE (Long Term Evolution) network, comprises: processing circuitry including a buffer and a radio transceiver; wherein the processing circuitry is to perform any of the methods as set forth in Examples 1 through 10.

In Example 12, a computer-readable medium contains instructions for performing any of the methods as set forth in Examples 1 through 10.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the invention is not limited in this respect. An example LTE system includes a number of mobile stations, defined by the LTE specification as User Equipment (UE), communicating with a base station, defined by the LTE specifications as an eNodeB.

Antennas referred to herein may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to take advantage of spatial diversity and the different channel characteristics that may result between each of antennas and the antennas of a transmitting station. In some MIMO embodiments, antennas may be separated by up to 1/10 of a wavelength or more.

In some embodiments, a receiver as described herein may be configured to receive signals in accordance with specific communication standards, such as the Institute of Electrical and Electronics Engineers (IEEE) standards including IEEE 802.11-2007 and/or 802.11(n) standards and/or proposed specifications for WLANs, although the scope of the invention is not limited in this respect as they may also be suitable to transmit and/or receive communications in accordance with other techniques and standards. In some embodiments, the receiver may be configured to receive signals in accordance with the IEEE 802.16-2004, the IEEE 802.16(e) and/or IEEE 802.16(m) standards for wireless metropolitan area networks (WMANs) including variations and evolutions thereof, although the scope of the invention is not limited in this respect as they may also be suitable to transmit and/or receive communications in accordance with other techniques and standards. In some embodiments, the receiver may be configured to receive signals in accordance with the Universal Terrestrial Radio Access Network (UTRAN) LTE communication standards. For more information with respect to the IEEE 802.11 and IEEE 802.16 standards, please refer to "IEEE Standards for Information Technology -- Telecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, release 8, March 2008, including variations and evolutions thereof.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure, for example, to comply with 37 C.F.R. §1.72(b) in the United States of America. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment.

**Claims**

1. A method for receiving DASH, dynamic streaming over HTTP, hypertext transfer protocol, data in a client device (220) over a network, comprising:

   receiving a media presentation description, MPD, (242) from an HTTP server (218), wherein the MPD (242) contains uniform resource identifiers, URIs, for a media presentation made up of a plurality of ordered media segments, and wherein, for each of the ordered media segments, the MPD (242) contains URIs for the same media content at different bitrates, referred to as representations, and includes for each representation a bitrate, **characterized in that** the MPD (242) further includes a quality measure related to the quality of experience, QoE, that results when that representation is played, wherein the quality measure is generated by a media server (212) providing the media segments; and
   downloading selected representations for playback at designated playback times from the HTTP server (218) using the URIs in the MPD (242), wherein representations received before their designated playback times are stored in a buffer, and wherein representations are selected for downloading as a function of the amount of data currently stored in the buffer, the bitrates and quality measures of the representations, and an estimated currently available throughput capacity.

2. The method of claim 1 further comprising, at the beginning of playback, requesting the representation with the lowest bitrate that meets a minimum quality requirement for the first $N$ representations in order to minimize playback delay, where $N$ is a specified integer, such that:

$$r(s) = \operatorname{argmin}_r ((Q(r,s) > Q_{min}); \quad r = 1, \dots m; \quad s = 1, \dots N;$$

   where $r(s)$ is the representation $r$ to be selected for media segment $s$, $r \in [1, m]$, $m$ is the number of representations available for media segment $s$, $Q(r,s)$ is the quality of representation $r$ for segment $s$, and $Q_{min}$ is a specified minimum quality requirement.

3. The method of claim 1 further comprising computing an estimated throughput capacity $BW_{est}(s)$ for a particular media segment $s$ as a weighted sum of the throughputs of previously downloaded media segments such that:

$$BW_{est}(s) = \sum_{i=1}^{K} w(i) BW(s-i)$$

where $BW(s)$ is the actual throughput corresponding to media segment $s$ and $K$ is a specified integer.

4. The method of claim 1 further comprising, for a media segment $s$, selecting a representation $r(s)$ for downloading with the lowest bitrate when $buf(t) = 0$ where $buf(t)$ is a measure of the amount of data stored in the buffer at time $t$ and corresponds to a particular duration of playback.

5. The method of claim 3 further comprising, when $buf(t) < B_{low}$, where $buf(t)$ is a measure of the amount of data stored in the buffer at time $t$ corresponding to a particular duration of playback and where $B_{low}$ is a specified buffer level, selecting a representation $r(s)$ to be downloaded for media segment $s$ as:

$$r(s) = \min(r_{qmin}(s), r_{rmax}(s))$$

where $r_{qmin}(s)$ is the lowest bitrate representation that satisfies a specified minimum quality requirement $Q_{min}$ expressed as:

$$r_{qmin}(s) = \operatorname{argmin}_r ((Q(r,s) > Q_{min}),$$

where $r_{rmax}(s)$ is the highest bitrate representation under current throughput constraints expressed as:

$$r_{rmax}(s) = \operatorname{argmax}_r ((R(r,s) < BW_{est}(s),$$

where $Q(r,s)$ is the quality measure of representation $r$ for media segment $s$, and where $R(r,s)$ is the bitrate of representation $r$ for media segment $s$.

6. The method of claim 3 further comprising, when $B_{low} \leq buf(t) < B_{high}$, where $buf(t)$ is a measure of the amount of data stored in the buffer at time $t$ corresponding to a particular duration of playback and where $B_{low}$ and $B_{high}$ are specified buffer levels, selecting a representation $r(s)$ to be downloaded for media segment $s$ as:

$$r(s) = \min (\max(r_{qmin}(s), r_{rmax}(s)), r_{qmax}(s))$$

where $r_{qmin}(s)$ is the lowest bitrate representation that satisfies a specified minimum quality requirement $Q_{min}$ expressed as:

$$r_{qmin}(s) = \operatorname{argmin}_r ((Q(r,s) > Q_{min}),$$

where $r_{rmax}(s)$ is the highest bitrate representation under current throughput constraints expressed as:

$$r_{rmax}(s) = \operatorname{argmax}_r ((R(r,s) < BW_{est}(s),$$

where $r_{qmax}(s)$ is the lowest bitrate representation that satisfies a specified maximum quality requirement $Q_{max}$ expressed as:

$$r_{qmax}(s) = \mathrm{argmin}_r ((Q(r,s) > Q_{max}),$$

where $Q(r,s)$ is the quality measure of representation $r$ for media segment $s$, and where $R(r,s)$ is the bitrate of representation $r$ for media segment $s$.

7. The method of claim 3 further comprising, when $B_{high} \leq buf(t)$, where $buf(t)$ is a measure of the amount of data stored in the buffer at time t corresponding to a particular duration of playback and where $B_{high}$ is a specified buffer level, selecting a representation $r(s)$ to be downloaded for media segment s as:

$$r(s) = r_{qmax}(s) \ \ \mathrm{if} \ R(r_{qmax}(s),s) < \alpha \, BW_{est}(s)$$

and as

$$r(s) = \max(r_{qmin}(s), r_{rmax}(s)) \ \mathrm{if} \ R(r_{qmax}(s),s) > \alpha \, BW_{est}(s)$$

where $\alpha$ is a specified parameter greater than one, where $r_{qmin}(s)$ is the lowest bitrate representation that satisfies a specified minimum quality requirement $Q_{min}$ expressed as:

$$r_{qmin}(s) = \mathrm{argmin}_r ((Q(r,s) > Q_{min}),$$

where $r_{rmax}(s)$ is the highest bitrate representation under current throughput constraints expressed as:

$$r_{rmax}(s) = \mathrm{argmax}_r ((R(r,s) < BW_{est}(s),$$

where $r_{qmax}(s)$ is the lowest bitrate representation that satisfies a specified maximum quality requirement $Q_{max}$ expressed as:

$$r_{qmax}(s) = \mathrm{argmin}_r ((Q(r,s) > Q_{max}) \, ,$$

where $Q(r,s)$ is the quality measure of representation $r$ for media segment $s$, and where $R(r,s)$ is the bitrate of representation $r$ for media segment $s$.

8. The method of claim 1 further comprising:

selecting a representation $r(s)$ to be downloaded for media segment $s$ as:

$$r(s) = \min(r_{qmin}(s), r_{rmax}(s))$$

if $buf(t) < B_{low}$;
selecting a representation $r(s)$ to be downloaded for media segment $s$ as:

$$r(s) = \min (\max(r_{qmin}(s), r_{rmax}(s)), r_{qmax}(s))$$

if $B_{low} \leq buf(t) < B_{high}$;
selecting a representation $r(s)$ to be downloaded for media segment $s$ as:

$$r(s) = r_{qmax}(s) \ \ \mathrm{if} \ R(r_{qmax}(s),s) < \alpha \, BW_{est}(s)$$

and as

$$r(s) = \max(r_{qmin}(s), r_{rmax}(s)) \text{ if } R(r_{qmax}(s),s) > \alpha BW_{est}(s)$$

if $B_{high} \leq buf(t)$ ;

where $buf(t)$ is a measure of the amount of data stored in the buffer at time $t$ corresponding to a particular duration of playback, where $B_{high}$ and $B_{low}$ are specified buffer levels, where $BW_{est}(s)$ is an estimated throughput capacity computed for a particular media segment $s$ as a weighted sum of the throughputs of previously downloaded media segments such that:

$$BW_{est}(s) = \sum_{i=1}^{K} w(i)BW(s-i)$$

where $BW(s)$ is the actual throughput corresponding to media segment $s$ and $K$ is a specified integer, where $r_{qmin}(s)$ is the lowest bitrate representation that satisfies a specified minimum quality requirement $Q_{min}$ expressed as:

$$r_{qmin}(s) = \operatorname{argmin}_r ((Q(r,s) > Q_{min}),$$

where $r_{rmax}(s)$ is the highest bitrate representation under current throughput constraints expressed as:

$$r_{rmax}(s) = \operatorname{argmax}_r ((R(r,s) < BW_{est}(s),$$

where $r_{qmax}(s)$ is the lowest bitrate representation that satisfies a specified maximum quality requirement $Q_{max}$ expressed as:

$$r_{qmax}(s) = \operatorname{argmin}_r ((Q(r,s) > Q_{max}),$$

where $Q(r,s)$ is the quality measure of representation $r$ for media segment $s$, and where $R(r,s)$ is the bitrate of representation $r$ for media segment $s$.

9. The method of claim 1 wherein the quality measure is selected from a group that includes Video MS-SSIM (Multi-Scale Structural Similarity), video MOS (mean opinion score), video quality metrics (VQM), structural similarity metrics (SSIM), peak signal-to-noise ratio (PSNR), and perceptual evaluation of video quality metrics (PEVQ).

10. A user equipment, UE, device for operating in an Long Term Evolution, LTE, network, comprising:

processing circuitry including a buffer and a radio transceiver;
wherein the processing circuitry is to:

receive a media presentation description, MPD, from an HTTP server, wherein the MPD contains uniform resource identifiers, URIs, for a media presentation made up of a plurality of ordered media segments, and wherein, for each of the ordered media segments, the MPD contains URIs for the same media content at different bitrates, referred to as representations, and includes for each representation a bitrate and a quality measure related to the quality of experience, QoE, that results when that representation is played, wherein the quality measure is generated by a media server providing the media segments; and
download selected representations for playback at designated playback times from the HTTP server using the URIs in the MPD, wherein representations received before their designated playback times are stored in a buffer, and wherein representations are selected for downloading as a function of the amount of data currently stored in the buffer, the bitrates and quality measures of the representations, and an estimated currently available throughput capacity.

**11.** The device of claim 10 wherein the processing circuitry is to compute an estimated throughput capacity $BW_{est}(s)$ for a particular media segment $s$ as a weighted sum of the throughputs of previously downloaded media segments such that:

$$BW_{est}(s) = \sum_{i=1}^{K} w(i) BW(s-i)$$

where $BW(s)$ is the actual throughput corresponding to media segment $s$ and $K$ is a specified integer.

**12.** The device of claim 11 wherein the processing circuitry is to, when $buf(t) < B_{low}$, where $buf(t)$ is a measure of the amount of data stored in the buffer at time $t$ corresponding to a particular duration of playback and where $B_{low}$ is a specified buffer level, select a representation $r(s)$ to be downloaded for media segment $s$ as:

$$r(s) = \min(r_{qmin}(s), r_{rmax}(s))$$

where $r_{qmin}(s)$ is the lowest bitrate representation that satisfies a specified minimum quality requirement $Q_{min}$ expressed as:

$$r_{qmin}(s) = \operatorname{argmin}_r ((Q(r,s) > Q_{min}),$$

where $r_{rmax}(s)$ is the highest bitrate representation under current throughput constraints expressed as:

$$r_{rmax}(s) = \operatorname{argmax}_r ((R(r,s) < BW_{est}(s),$$

where $Q(r,s)$ is the quality measure of representation $r$ for media segment $s$, and where $R(r,s)$ is the bitrate of representation $r$ for media segment $s$.

**Patentansprüche**

**1.** Verfahren zum Empfangen von Daten für das dynamische adaptive Streaming über Hypertextübertragungsprotokoll (Dynamic Adaptive Streaming over HTTP, DASH) in einer Client-Vorrichtung (220) über ein Netzwerk, umfassend:

Empfangen einer Medienpräsentationsbeschreibung (Media Presentation Description, MPD) (242) von einem HTTP-Server (218),
wobei die MPD (242) einheitliche Ressourcenkennungen (Uniform Resource Identifiers, URIs) für eine Medienpräsentation enthält, die aus mehreren geordneten Mediensegmenten besteht, und wobei die MPD (242) für jedes der geordneten Mediensegmente URIs für denselben Medieninhalt bei verschiedenen Bitraten enthält, die als Darstellungen bezeichnet werden, und für jede Darstellung eine Bitrate enthält, **dadurch gekennzeichnet, dass** die MPD (242) ferner ein Qualitätsmaß
enthält, das sich auf die Erfahrungsqualität (Quality of Experience, QoE) bezieht, die sich ergibt, wenn diese Darstellung wiedergegeben wird, wobei das Qualitätsmaß durch einen Medienserver (212) erzeugt wird, der die Mediensegmente bereitstellt; und
Herunterladen ausgewählter Darstellungen zur Wiedergabe zu festgelegten Wiedergabezeiten von dem HTTP-Server (218) unter Verwendung der URIs in der MPD (242), wobei Darstellungen, die vor ihren festgelegten Wiedergabezeiten empfangen werden, in einem Puffer gespeichert werden, und wobei Darstellungen zum Herunterladen als eine Funktion der aktuell im Puffer gespeicherten Datenmenge, der Bitraten und der Qualitätsmaße der Darstellungen sowie einer geschätzten derzeit verfügbaren Durchsatzkapazität ausgewählt werden.

**2.** Verfahren nach Anspruch 1, ferner umfassend, zu Beginn der Wiedergabe, das Anfordern der Darstellung mit der niedrigsten Bitrate, die eine Mindestqualitätsanforderung für die ersten N Darstellungen erfüllt, um die Wiedergabeverzögerung zu minimieren, wobei N eine spezifizierte ganze Zahl ist, sodass:

$$r(s) = \text{argmin}_r \left( (Q(r,s) > Q_{min}); \; r = 1, \dots m; \; s = 1, \dots N; \right.$$

wobei $r(s)$ die Darstellung $r$ ist, die für das Mediensegment $s, r \in [1,m]$ ausgewählt werden soll, $m$ die Anzahl der für das Mediensegment $s$ verfügbaren Darstellungen ist, $Q(r,s)$ die Qualität der Darstellung $r$ für das Segment $s$ ist und $Q_{min}$ eine spezifizierte Mindestqualitätsanforderung ist.

3. Verfahren nach Anspruch 1, ferner umfassend das Berechnen einer geschätzten Durchsatzkapazität $BW_{est}(s)$ für ein bestimmtes Mediensegment s als eine gewichtete Summe der Durchsätze von zuvor heruntergeladenen Mediensegmenten, sodass:

$$BW_{est}(s) = \sum_{i=1}^{K} w(i) BW(s-i)$$

wobei $BW(s)$ der tatsächliche Durchsatz ist, der dem Mediensegment $s$ entspricht, und $K$ eine spezifizierte ganze Zahl ist.

4. Verfahren nach Anspruch 1, ferner umfassend, für ein Mediensegment $s$, das Auswählen einer Darstellung $r(s)$ zum Herunterladen mit der niedrigsten Bitrate, wenn $buf(t) = 0$ ist, wobei $buf(t)$ ein Maß für die Datenmenge ist, die in dem Puffer zu einem Zeitpunkt $t$ gespeichert wird und einer bestimmten Wiedergabedauer entspricht.

5. Verfahren nach Anspruch 3, ferner umfassend, wenn $buf(t) < B_{low}$, wobei $buf(t)$ ein Maß für die Datenmenge ist, die in dem Puffer zu einem Zeitpunkt $t$ gespeichert wird, der einer bestimmten Wiedergabedauer entspricht, und wobei $B_{low}$ eine spezifizierte Pufferebene ist, das Auswählen einer Darstellung $r(s)$, die für das Mediensegment $s$ heruntergeladen werden soll als:

$$r(s) = \min(r_{qmin}(s), \; r_{rmax}(s))$$

wobei $r_{qmin}(s)$ die Darstellung mit der niedrigsten Bitrate ist, die eine bestimmte Mindestqualitätsanforderung $Q_{min}$ erfüllt, ausgedrückt als:

$$r_{qmin}(s) = \text{argmin}_r \left( (Q(r,s) > Q_{min}), \right.$$

wobei $r_{rmax}(s)$ die Darstellung mit der höchsten Bitrate unter aktuellen Durchsatzbeschränkungen ist, ausgedrückt als:

$$r_{rmax}(s) = \text{argmax}_r \left( (R(r,s) < BW_{est}(s), \right.$$

wobei $Q(r,s)$ das Qualitätsmaß der Darstellung r für das Mediensegment $s$ ist und wobei $R(r,s)$ die Bitrate der Darstellung $r$ für das Mediensegment $s$ ist.

6. Verfahren nach Anspruch 3, ferner umfassend, wenn $B_{low} \leq buf(t) < B_{high}$, wobei $buf(t)$ ein Maß für die Datenmenge ist, die in dem Puffer zu einem Zeitpunkt $t$ gespeichert wird, der einer bestimmten Wiedergabedauer entspricht, und wobei $B_{low}$ und $B_{high}$ spezifizierte Pufferebenen sind, das Auswählen einer Darstellung $r(s)$, die für das Mediensegment $s$ heruntergeladen werden soll als:

$$r(s) = \min \left( \max(r_{qmin}(s), \; r_{rmax}(s)), \; r_{qmax}(s) \right)$$

wobei $r_{qmin}$ *(s)* die Darstellung mit der niedrigsten Bitrate ist, die eine bestimmte Mindestqualitätsanforderung $Q_{min}$ erfüllt, ausgedrückt als:

$$r_{qmin}(s) = \mathrm{argmin}_r\,((Q(r,s) > Q_{min}),$$

wobei $r_{rmax}(s)$ die Darstellung mit der höchsten Bitrate unter aktuellen Durchsatzbeschränkungen ist, ausgedrückt als:

$$r_{rmax}(s) = \mathrm{argmax}_r\,((R(r,s) < BW_{est}(s)),$$

wobei $r_{qmax}(s)$ die Darstellung mit der niedrigsten Bitrate ist, die eine spezifizierte maximale Qualitätsanforderung $Q_{max}$ erfüllt, ausgedrückt als:

$$r_{qmax}(s) = \mathrm{argmin}_r\,((Q(r,s) > Q_{max}),$$

wobei $Q(r,s)$ das Qualitätsmaß der Darstellung *r* für das Mediensegment *s* ist und wobei $R(r,s)$ die Bitrate der Darstellung *r* für das Mediensegment *s* ist.

**7.** Verfahren nach Anspruch 3, ferner umfassend, wenn $B_{high} \leq buf(t)$, wobei *buf(t)* ein Maß für die Datenmenge ist, die in dem Puffer zu einem Zeitpunkt *t* gespeichert wird, der einer bestimmten Wiedergabedauer entspricht, und wobei $B_{high}$ eine spezifizierte Pufferebene ist, das Auswählen einer Darstellung *r(s),* die für das Mediensegment s heruntergeladen werden soll als:

$$r(s) = r_{qmax}(s) \text{ wenn } R(r_{qmax}(s),s) < \alpha\, BW_{est}(s)$$

und als

$$r(s) = \mathrm{max}(r_{qmin}(s),\, r_{rmax}(s)) \text{ wenn } R(r_{qmax}(s),s) > \alpha\, BW_{est}(s)$$

wobei $\alpha$ ein spezifizierter Parameter größer als eins ist, wobei $r_{qmin}$ *(s)* die Darstellung mit der niedrigsten Bitrate ist, die eine bestimmte Mindestqualitätsanforderung $Q_{min}$ erfüllt, ausgedrückt als:

$$r_{qmin}(s) = \mathrm{argmin}_r\,((Q(r,s) > Q_{min}),$$

wobei $r_{rmax}(s)$ die Darstellung mit der höchsten Bitrate unter aktuellen Durchsatzbeschränkungen ist, ausgedrückt als:

$$r_{rmax}(s) = \mathrm{argmax}_r\,((R(r,s) < BW_{est}(s),$$

wobei $r_{qmax}(s)$ die Darstellung mit der niedrigsten Bitrate ist, die eine spezifizierte maximale Qualitätsanforderung $Q_{max}$ erfüllt, ausgedrückt als:

$$r_{qmax}(s) = \mathrm{argmin}_r\,((Q(r,s) > Q_{max}),$$

wobei $Q(r,s)$ das Qualitätsmaß der Darstellung *r* für das Mediensegment *s* ist und wobei $R(r,s)$ die Bitrate der Darstellung *r* für das Mediensegment *s* ist.

8. Verfahren nach Anspruch 1, ferner umfassend:

Auswählen einer Darstellung $r(s)$, die für die Mediensegmente $s$ heruntergeladen werden soll als:

$$r(s) = \min(r_{qmin}(s), r_{rmax}(s))$$

wenn buf $(t) < B_{low}$;
Auswählen einer Darstellung $r(s)$, die für die Mediensegmente $s$ heruntergeladen werden soll als:

$$r(s) = \min(\max(r_{qmin}(s), r_{rmax}(s)), r_{qmax}(s))$$

wenn $B_{low} \leq$ buf $(t) < B_{high}$;
Auswählen einer Darstellung $r(s)$, die für die Mediensegmente $s$ heruntergeladen werden soll als:

$$r(s) = r_{qmax}(s) \text{ wenn } R(r_{qmax}(s),s) < \alpha\, BW_{est}(s)$$

und als

$$r(s) = \max(r_{qmin}(s), r_{rmax}(s)) \text{ wenn } R(r_{qmax}(s),s) > \alpha\, BW_{est}(s)$$

wenn $B_{high} \leq$ buf$(t)$ ;
wobei *buf(t)* ein Maß für die Datenmenge ist, die in dem Puffer zu einem Zeitpunkt t gespeichert wird, der einer bestimmten Wiedergabedauer entspricht, wobei $B_{high}$ und $B_{low}$ spezifizierte Pufferebenen sind, wobei $BW_{est}(s)$ eine geschätzte Durchsatzkapazität ist, die für ein bestimmtes Mediensegment $s$ als gewichtete Summe der Durchsätze von zuvor heruntergeladenen Mediensegmenten berechnet wird, sodass:

$$BW_{est}(s) = \sum_{i=1}^{K} w(i)BW(s-i)$$

wobei *BW(s)* der tatsächliche Durchsat ist, der dem Mediensegment *s* entspricht, und *K* eine spezifizierte ganze Zahl ist, wobei $r_{qmin}(s)$ die Darstellung mit der niedrigsten Bitrate ist, die eine bestimmte Mindestqualitätsanforderung $Q_{min}$ erfüllt, ausgedrückt als:

$$r_{qmin}(s) = \operatorname{argmin}_r ((Q(r,s) > Q_{min}),$$

wobei $r_{rmax}(s)$ die Darstellung mit der höchsten Bitrate unter aktuellen Durchsatzbeschränkungen ist, ausgedrückt als:

$$r_{rmax}(s) = \operatorname{argmax}_r ((R(r,s) < BW_{est}(s)),$$

wobei $r_{qmax}(s)$ die Darstellung mit der niedrigsten Bitrate ist, die eine spezifizierte maximale Qualitätsanforderung $Q_{max}$ erfüllt, ausgedrückt als:

$$r_{qmax}(s) = \operatorname{argmin}_r ((Q(r,s) > Q_{max}),$$

wobei $Q(r,s)$ das Qualitätsmaß der Darstellung $r$ für das Mediensegment $s$ ist und wobei $R(r,s)$ die Bitrate der Darstellung $r$ für das Mediensegment $s$ ist.

9. Verfahren nach Anspruch 1, wobei das Qualitätsmaß aus einer Gruppe ausgewählt wird, die mehrskalige Strukturähnlichkeit von Video (Multi-Scale Structural Similarity, MS-SSIM), mittlere Meinungsbewertung für Video (Mean Opinion Score, MOS), Videoqualitätsmetriken (VQM), Strukturähnlichkeitsmetriken (Structural Similarity Metrics, SSIM), Spitzensignal-RauschVerhältnis (Peak Signal-to-Noise Ratio, PSNR) und perzeptuelle Auswertung von Videoqualitätsmessgrößen (Perceptual Evaluation of Video Quality Metrics, PEVQ) enthält.

10. Benutzergerät (User Equipment, UE) für den Betrieb in einem Long Term Evolution (LTE)-Netzwerk, umfassend:

   Verarbeitungsschaltung mit einem Puffer und einem Funktransceiver;
   wobei die Verarbeitungsschaltung dazu dient:

   eine Medienpräsentationsbeschreibung (MPD) von einem HTTP-Server zu empfangen, wobei die MPD einheitliche Ressourcenkennungen (URIs) für eine Medienpräsentation enthält, die aus mehreren geordneten Mediensegmenten besteht, und wobei die MPD für jedes der geordneten Mediensegmente URIs für denselben Medieninhalt bei verschiedenen Bitraten enthält, die als Darstellungen bezeichnet werden, und für jede Darstellung eine Bitrate und ein Qualitätsmaß enthält, die sich auf die Erfahrungsqualität (QoE) beziehen, die sich ergibt, wenn diese Darstellung wiedergegeben wird, wobei das Qualitätsmaß durch einen Medienserver erzeugt wird, der die Mediensegmente bereitstellt; und
   ausgewählte Darstellungen zur Wiedergabe zu festgelegten Wiedergabezeiten von dem HTTP-Server unter Verwendung der URIs in der MPD herunterzuladen, wobei Darstellungen, die vor ihren festgelegten Wiedergabezeiten empfangen werden, in einem Puffer gespeichert werden, und wobei Darstellungen zum Herunterladen als eine Funktion der aktuell im Puffer gespeicherten Datenmenge, der Bitraten und der Qualitätsmaße der Darstellungen sowie einer geschätzten derzeit verfügbaren Durchsatzkapazität ausgewählt werden.

11. Vorrichtung nach Anspruch 10, wobei die Verarbeitungsschaltung eine geschätzte Durchsatzkapazität $BW_{est}(s)$ für ein bestimmtes Mediensegment $s$ als eine gewichtete Summe der Durchsätze von zuvor heruntergeladenen Mediensegmenten berechnen soll, sodass:

$$BW_{est}(s) = \sum_{i=1}^{K} w(i) BW(s-i)$$

wobei $BW(s)$ der tatsächliche Durchsatz ist, der dem Mediensegment $s$ entspricht, und $K$ eine spezifizierte ganze Zahl ist.

12. Vorrichtung nach Anspruch 11, wobei die Verarbeitungsschaltung dazu dient, wenn $buf(t) < B_{low}$, wobei $buf(t)$ ein Maß für die Datenmenge ist, die in dem Puffer zu einem Zeitpunkt $t$ gespeichert wird und einer bestimmten Wiedergabedauer entspricht, und wobei $B_{low}$ eine spezifizierte Pufferebene ist, eine Darstellung $r(s)$ auszuwählen, die für das Mediensegment $s$ heruntergeladen werden soll als:

$$r(s) = \min(r_{qmin}(s), r_{rmax}(s))$$

wobei $r_{qmin}(s)$ die Darstellung mit der niedrigsten Bitrate ist, die eine bestimmte Mindestqualitätsanforderung $Q_{min}$ erfüllt, ausgedrückt als:

$$r_{qmin}(s) = \operatorname{argmin}_r ((Q(r,s) > Q_{min}),$$

wobei $r_{rmax}(s)$ die Darstellung mit der höchsten Bitrate unter aktuellen Durchsatzbeschränkungen ist, ausgedrückt als:

$$r_{rmax}(s) = \operatorname{argmax}_r ((R(r,s) < BW_{est}(s),$$

wobei $Q(r,s)$ das Qualitätsmaß der Darstellung $r$ für das Mediensegment $s$ ist und wobei $R(r,s)$ die Bitrate der Darstellung $r$ für das Mediensegment $s$ ist.

**Revendications**

1. Procédé de réception de données de diffusion continue dynamique sur HTTP, protocole de transfert hypertexte, DASH dans un dispositif client (220) sur un réseau, comprenant :

   la réception d'une description de présentation multimédia, MPD, (242) en provenance d'un serveur HTTP (218), dans lequel la MPD (242) contient des identifiants uniformes de ressource, URI, pour une présentation multimédia constituée d'une pluralité de segments multimédias ordonnés, et dans lequel, pour chacun des segments multimédias ordonnés, la MPD (242) contient des URI pour le même contenu multimédia à des débits binaires différents, désignés par représentations, et inclut pour chaque représentation un débit binaire, **caractérisé en ce que** la MPD (242) inclut en outre une mesure de qualité relative à la qualité d'expérience, QoE, qui en résulte lorsque cette représentation est lue, dans lequel la mesure de qualité est générée par un serveur multimédia (212) fournissant les segments multimédias ; et
   le téléchargement de représentations sélectionnées pour une relecture à des temps de relecture désignés à partir du serveur HTTP (218) à l'aide des URI dans la MPD (242), dans lequel des représentations reçues avant leurs temps de relecture désignés sont stockées dans une mémoire tampon, et dans lequel des représentations sont sélectionnées pour un téléchargement en fonction de la quantité de données actuellement stockées dans la mémoire tampon, des débits binaires et des mesures de qualité des représentations, et d'une capacité de débit actuellement disponible estimée.

2. Procédé selon la revendication 1, comprenant en outre, au commencement de la relecture, la requête de la représentation ayant le débit binaire le plus bas qui satisfait une exigence de qualité minimale pour les $N$ premières représentations afin de minimiser un retard de relecture, où $N$ est un entier spécifié, tel que :

$$r(s) = \operatorname{argmin}_r \left( (Q(r,s) > Q_{min}); \ r = 1, \dots m; \ s = 1, \dots N; \right.$$

   où $r(s)$ est la représentation r à sélectionner pour un segment multimédia $s, r \in [1, m]$, $m$ est le nombre de représentations disponibles pour un segment multimédia $s$, $Q(r, s)$ est la qualité de la représentation $r$ pour un segment s, et $Q_{min}$ est l'exigence de qualité minimale spécifiée.

3. Procédé selon la revendication 1, comprenant en outre le calcul d'une capacité de débit estimée $BW_{est}(s)$ pour un segment multimédia particulier $s$ comme une somme pondérée des débits de segments multimédias téléchargés antérieurement tel que :

$$BW_{est}(s) = \sum_{i=1}^{K} w(i) BW(s-i)$$

   où $BW(s)$ est le débit effectif correspondant à un segment multimédia $s$ et $K$ est un entier spécifié.

4. Procédé selon la revendication 1, comprenant en outre, pour un segment multimédia $s$, la sélection d'une représentation $r(s)$ pour un téléchargement avec le débit binaire le plus bas lorsque $buf(t) = 0$ où $buf(t)$ est une mesure de la quantité de données stockées dans la mémoire tampon au temps $t$ et correspond à une durée particulière de relecture.

5. Procédé selon la revendication 3, comprenant en outre, lorsque $buf(t) < B_{low}$, où $buf(t)$ est une mesure de la quantité de données stockées dans la mémoire tampon à un temps $t$ correspondant à une durée particulière de relecture et où $B_{low}$ est un niveau de mémoire tampon spécifié, la sélection d'une représentation $r(s)$ à télécharger pour un segment multimédia s par :

$$r(s) = \min(r_{qmin}(s),\ r_{rmax}(s))$$

où $r_{qmin}(s)$ est la représentation de débit binaire le plus bas qui satisfait une exigence de qualité minimale spécifiée $Q_{min}$ exprimée par :

$$r_{qmin}(s) = \operatorname{argmin}_r ((Q(r,s) > Q_{min}),$$

où $r_{rmax}(s)$ est la représentation de débit binaire le plus haut sous des contraintes de débit actuel exprimée par :

$$r_{rmax}(s) = \operatorname{argmax}_r ((R(r,s) < BW_{est}(s),$$

où $Q(r,s)$ est la mesure de qualité de la représentation r pour un segment multimédia $s$, et
où $R(r,s)$ est le débit binaire de la représentation $r$ pour un segment multimédia s.

6. Procédé selon la revendication 3, comprenant en outre, lorsque $B_{low} \leq buf(t) < B_{high}$, où $buf(t)$ est une mesure de la quantité de données stockées dans la mémoire tampon au temps $t$ correspondant à une durée particulière de relecture et où $B_{low}$ et $B_{high}$ sont des niveaux de mémoire tampon spécifiés, la sélection d'une représentation $r(s)$ à télécharger pour un segment multimédia s par :

$$r(s) = \min (\max(r_{qmin}(s),\ r_{rmax}(s)),\ r_{qmax}(s))$$

où $r_{qmin}(s)$ est la représentation de débit binaire le plus bas qui satisfait une exigence de qualité minimale spécifiée $Q_{min}$ exprimée par :

$$r_{qmin}(s) = \operatorname{argmin}_r ((Q(r,s) > Q_{min}),$$

où $r_{rmax}(s)$ est la représentation de débit binaire le plus haut sous des contraintes de débit actuel exprimée par :

$$r_{rmax}(s) = \operatorname{argmax}_r ((R(r,s) < BW_{est}(s),$$

où $r_{qmax}(s)$ est la représentation de débit binaire le plus bas qui satisfait une exigence de qualité maximale spécifiée $Q_{max}$ exprimée par :

$$r_{qmax}(s) = \operatorname{argmin}_r ((Q(r,s) > Q_{max}),$$

où $Q(r,s)$ est la mesure de qualité de la représentation $r$ pour un segment multimédia $s$, et
où $R(r,s)$ est le débit binaire de la représentation $r$ pour un segment multimédia $s$.

7. Procédé selon la revendication 3, comprenant en outre, lorsque $B_{high} \leq buf(t)$, où $buf(t)$ est une mesure de la quantité de données stockées dans la mémoire tampon au temps $t$ correspondant à une durée particulière de relecture et où $B_{high}$ est un niveau de mémoire tampon spécifié, la sélection d'une représentation $r(s)$ à télécharger pour un segment multimédia $s$ par :

$$r(s) = r_{qmax}(s) \quad \texttt{si} \quad R(r_{qmax}(s),s) < \alpha\, BW_{est}(s)$$

et par

$$r(s) = \max(r_{qmin}(s),\ r_{rmax}(s)) \quad \texttt{si} \quad R(r_{qmax}(s),s) > \alpha\, BW_{est}(s)$$

où $\alpha$ est un paramètre spécifié plus grand que un, où $r_{qmin}(s)$ est la représentation de débit binaire le plus bas qui satisfait une exigence de qualité minimale spécifiée $Q_{min}$ exprimée par :

$$r_{qmin}(s) = \operatorname{argmin}_r ((Q(r,s) > Q_{min}),$$

où $r_{rmax}(s)$ est la représentation de débit binaire le plus haut sous des contraintes de débit actuel exprimée par :

$$r_{rmax}(s) = \operatorname{argmax}_r ((R(r,s) < BW_{est}(s),$$

où $r_{qmax}(s)$ est la représentation de débit binaire le plus bas qui satisfait une exigence de qualité maximale spécifiée $Q_{max}$ exprimée par :

$$r_{qmax}(s) = \operatorname{argmin}_r ((Q(r,s) > Q_{max}) ,$$

où $Q(r,s)$ est la mesure de qualité de la représentation $r$ pour un segment multimédia $s$, et
où $R(r,s)$ est le débit binaire de la représentation $r$ pour un segment multimédia $s$.

8.  Procédé selon la revendication 1, comprenant en outre :

la sélection d'une représentation $r(s)$ à télécharger pour un segment multimédia $s$ par :

$$r(s) = \min(r_{qmin}(s), r_{rmax}(s))$$

si $buf(t) < B_{low}$ ;
la sélection d'une représentation $r(s)$ à télécharger pour un segment multimédia $s$ par :

$$r(s) = \min (\max(r_{qmin}(s), r_{rmax}(s)), r_{qmax}(s))$$

si $B_{low} \leq buf(t) < B_{high}$ ;
la sélection d'une représentation $r(s)$ à télécharger pour un segment multimédia $s$ par :

$$r(s) = r_{qmax}(s) \text{ si } R(r_{qmax}(s),s) < \alpha \, BW_{est}(s)$$

et par

$$r(s) = \max(r_{qmin}(s), r_{rmax}(s)) \text{ si } R(r_{qmax}(s),s) > \alpha \, BW_{est}(s)$$

si $B_{high} \leq buf(t)$ ;
où $buf(t)$ est une mesure de la quantité de données stockées dans la mémoire tampon au temps $t$ correspondant à une durée particulière de relecture, où $B_{high}$ et $B_{low}$ sont des niveaux de mémoire tampon spécifiés, où $BW_{est}(s)$ est une capacité de débit estimée calculée pour un segment multimédia particulier $s$ comme une somme pondérée des débits de segments multimédias téléchargés antérieurement de sorte que :

$$BW_{est}(s) = \sum_{i=1}^{K} w(i) BW (s - i)$$

où $BW(s)$ est le débit effectif correspondant au segment multimédia $s$ et $K$ est un entier spécifié, où $r_{qmin}(s)$ est la représentation de débit binaire le plus bas qui satisfait une exigence de qualité minimale spécifiée $Q_{min}$

exprimée par :

$$r_{qmin}(s) = \operatorname{argmin}_r ((Q(r,s) > Q_{min}),$$

où $r_{rmax}(s)$ est la représentation de débit binaire le plus haut sous des contraintes de débit actuel exprimée par :

$$r_{rmax}(s) = \operatorname{argmax}_r ((R(r,s) < BW_{est}(s),$$

où $r_{qmax}(s)$ est la représentation de débit binaire le plus bas qui satisfait une exigence de qualité maximale spécifiée $Q_{max}$ exprimée par :

$$r_{qmax}(s) = \operatorname{argmin}_r ((Q(r,s) > Q_{max}),$$

où $Q(r,s)$ est la mesure de qualité de la représentation r pour un segment multimédia $s$, et
où $R(r,s)$ est le débit binaire de la représentation $r$ pour un segment multimédia $s$.

9. Procédé selon la revendication 1, dans lequel la mesure de qualité est choisie dans un groupe qui inclut une vidéo MS-SSIM (similarité structurelle multiéchelle), une vidéo MOS (note d'opinion moyenne), des métriques de qualité vidéo (VQM), des métriques de similarité structurelle (SSIM), un rapport signal sur bruit crête (PSNR), et une évaluation perceptuelle de métriques de qualité vidéo (PEVQ).

10. Dispositif d'équipement utilisateur, UE, destiné à être exploité dans un réseau d'évolution à long terme, LTE, comprenant :

une circuiterie de traitement incluant une mémoire tampon et un émetteur/récepteur radio ;
dans lequel la circuiterie de traitement sert à :

recevoir une description de présentation multimédia, MPD, en provenance d'un serveur HTTP, dans lequel la MPD contient des identifiants uniformes de ressource, URI, pour une présentation multimédia constituée d'une pluralité de segments multimédias ordonnés, et dans lequel, pour chacun des segments multimédias ordonnés, la MPD contient des URI pour le même contenu multimédia à des débits binaires différents, désignés par représentation, et inclut pour chaque représentation, un débit binaire et une mesure de qualité relative à la qualité d'expérience, QoE, qui en résulte lorsque cette représentation est lue, dans lequel la mesure de qualité est générée par un serveur multimédia fournissant les segments multimédias ; et télécharger des représentations sélectionnées pour une relecture à des temps de relecture désignés à partir du serveur HTTP à l'aide des URI dans la MPD, dans lequel des représentations reçues avant leurs temps de relecture désignés sont stockées dans une mémoire tampon, et dans lequel des représentations sont sélectionnées pour un téléchargement en fonction de la quantité de données actuellement stockées dans la mémoire tampon, des débits binaires et de mesures de qualité des représentations, et d'une capacité de débit actuellement disponible estimée.

11. Dispositif selon la revendication 10, dans lequel la circuiterie de traitement sert à calculer une capacité de débit estimée $BW_{est}(s)$ pour un segment multimédia particulier $s$ comme une somme pondérée des débits de segments multimédias téléchargés antérieurement tel que :

$$BW_{est}(s) = \sum_{i=1}^{K} w(i) BW(s-i)$$

où $BW(s)$ est le débit effectif correspondant au segment multimédia $s$ et $K$ est un entier spécifié.

12. Dispositif selon la revendication 11, dans lequel la circuiterie de traitement sert, lorsque $buf(t) < B_{low}$, où $buf(t)$ est une mesure de la quantité de données stockées dans la mémoire tampon à un temps $t$ correspondant à une durée particulière de relecture et où $B_{low}$ est un niveau de mémoire tampon spécifié, à sélectionner une représentation $r(s)$ à télécharger pour un segment multimédia $s$ par :

$$r(s) = \min(r_{qmin}(s), r_{rmax}(s))$$

où $r_{qmin}(s)$ est la représentation de débit binaire le plus bas qui satisfait une exigence de qualité minimale spécifiée $Q_{min}$ exprimée par :

$$r_{qmin}(s) = \mathrm{argmin}_r\, ((Q(r,s) > Q_{min}),$$

où $r_{rmax}(s)$ est la représentation de débit binaire le plus haut sous des contraintes de débit actuel exprimée par :

$$r_{rmax}(s) = \mathrm{argmax}_r\, ((R(r,s) < BW_{est}(s),$$

où $Q(r,s)$ est la mesure de qualité de la représentation r pour un segment multimédia $s$, et
où $R(r,s)$ est le débit binaire de la représentation $r$ pour un segment multimédia $s$.

*Fig. 1*

*Fig.2*

*Fig.3*

EP 2 979 414 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120209952 A1

### Non-patent literature cited in the description

- 3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH. *Technical Specification 3GPP TS 26.247,* 2012
- **R. HUYSEGEMS et al.** Session reconstruction for HTTP adaptive streaming. *IEEE 20th International Workshop on Quality of Service,* 2012
- IEEE Standards for Information Technology -- Telecommunications and Information Exchange between Systems. *Local Area Networks - Specific Requirements - Part 11 "Wireless LAN Medium Access Control (MAC) and Physical Layer (PHY), ISO/IEC 8802-11,* 1999
- Air Interface for Fixed Broadband Wireless Access Systems. *Metropolitan Area Networks - Specific Requirements - Part 16,* May 2005
- *3rd Generation Partnership Project (3GPP) standards for UTRAN-LTE,* March 2008